# EUROPÄISCHE PATENTANMELDUNG

(11) **EP 4 421 133 A1**
(43) Veröffentlichungstag der Anmeldung: **28.08.2024**
(21) Anmeldenummer: 24158528.0
(22) Anmeldetag: 20.02.2024
(51) Int. Cl.: C09D 5/02, C09D 7/65

(54) **WÄSSRIGE ZUBEREITUNG ENTHALTEND MINDESTENS EIN WÄSSRIGES HYDROPHOBIERUNGSMITTEL ZUR HERSTELLUNG WÄSSRIGER BESCHICHTUNGSMITTELN MIT VERBESSERTER FRÜHREGENBESTÄNDIGKEIT**

(30) Priorität: 27.02.2023 EP 23158689
(71) Anmelder: Evonik Operations GmbH, 45128 Essen (DE)
(72) Erfinder: de Gans, Berend-Jan, 45478 Mülheim an der Ruhr (DE); Peters, Oliver, 45478 Mülheim an der Ruhr (DE); Giuffre, Giuseppe, 46145 Oberhausen (DE); Hübner, Laura, 45277 Essen (DE); Favresse, Philippe, 40880 Ratingen (DE); Sowa, Andrea, 45144 Essen (DE); Niedballa, Jonas, 45130 Essen (DE); Brokamp, Jasmin, 40668 Meerbusch (DE)
(74) Vertreter: Evonik Patent Association

(57) **Zusammenfassung**

Die Erfindung betrifft eine wässrige Zubereitung enthaltend mindestens ein wässriges Hydrophobierungsmittel und mindestens ein wasserlösliches, kationisches Polymer.

## Beschreibung

Gegenstand der vorliegenden Erfindung ist eine wässrige Zubereitung enthaltend mindestens ein wässriges Hydrophobierungsmittel zur Herstellung wässriger Beschichtungsmitteln mit verbesserter Frühregenbeständigkeit.

Die Trocknungsgeschwindigkeit wässriger Beschichtungsmittel hängt von der Temperatur und der Luftfeuchtigkeit ab. Bei niedriger Luftfeuchtigkeit ist die Trocknungsgeschwindigkeit oft schnell, manchmal sogar schneller als bei lösungsmittelbasierten Beschichtungsmitteln. Bei hoher Luftfeuchtigkeit und tiefen Temperaturen allerdings, wie z. B. morgens und abends, sowie vor, während und nach Regenfällen, ist die Trocknungsgeschwindigkeit deutlich verlangsamt, da das Verdunsten des Wassers verzögert ist. Solche Beschichtungen sind dann erst nach sehr langen Trocknungszeiten regenfest. Eine bestimmte Frühregenbeständigkeit oder Regenfestigkeit von wässrigen Beschichtungsmitteln bevor diese vollständig getrocknet sind, wird insbesondere für Außenanwendungen, wie z. B. Farben für Gebäude, Brücken, Schiffe und Straßenmarkierungen, sowie für Außenputze gewünscht.

Für das Erreichen einer solchen Frühregenbeständigkeit oder Regenfestigkeit gibt es verschiedene Prinzipien von praktischer Relevanz.

Bei einer Variante des sogenannten Flockulierungsprinzips enthält das Beschichtungsmittel ein anionisch stabilisiertes Bindemittel, ein Polyamin und Ammoniak als flüchtige Base, die nach dem Auftragen des Beschichtungsmittels verdampft, wodurch es während der Trocknung zur Flockulierung des Bindemittels kommt (US 5 527 853, EP 0 594 321, EP 0 728 822, EP 0 409 459). Bei einer anderen Variante enthält das Beschichtungsmittel ebenfalls ein ionisch stabilisiertes Bindemittel. Die Flockulierung desselben erfolgt dadurch, dass gleichzeitig mit dem Beschichtungsmittel eine Säurelösung oder eine Salzlösung versprüht wird (WO 94/29 391, EP 0 200 249, US 4 571 415, US 5 403 393). Eine Viskositätsänderung an der Oberfläche der Beschichtungsmittel kann dadurch erreicht werden, dass entweder ein Verdicker auf die frische Beschichtung appliziert wird, wodurch es zu einer Erhöhung der Viskosität kommt, wie z. B. in der EP 0 721 003 offenbart, oder eine Base auf die frische Beschichtung appliziert wird, die einen Verdicker enthält, der jedoch durch Einstellung eines niedrigen pH-Wertes nicht aktiviert ist.

Die EP 0 804 514 beschreibt schnelltrocknende, wässrige Beschichtungsmittel, umfassend eine wässrige, anionisch stabilisierte Emulsion und ein Polyimin. Der Zusatz eines Polyimins zu einem Beschichtungsmittel auf Basis einer wässrigen, anionisch stabilisierten Emulsion hat den Nachteil, dass die Mischung, sobald sie getrocknet ist, zur Gelbfärbung neigt. Dies ist insbesondere bei Emulsionen auf Basis von Vinylacetatcopolymeren der Fall. Für dekorative Außenanwendungen bringt diese Gelbfärbung der Beschichtung unerwünschte Farbtonverschiebungen mit sich.

Außerdem ist die Ladung eines Polyimins, und damit die Flokkulierung, von der pH abhängig. Bei höheren pH-Werten verschiebt sich das Ladungsgleichgewicht des Polyimins zunehmend von dem kationischen in den neutralen Bereich, was zu einem Verlust der Wirksamkeit führt. Moderne Beschichtungsmittel aber sind des Öfteren auf einen höheren pH eingestellt, um die Vermehrung von Mikroorganismen bei gleichzeitig geringem Einsatz von Bioziden reduzieren zu können.

Bekannt ist weiterhin die EP 1 250 388, in der ein schnelltrocknendes, wässriges Beschichtungsmittel, enthaltend mindestens ein wässriges Bindemittel beschrieben ist, das zusätzlich mindestens ein wasserlösliches, quaternäres Poly(allylamin) und ein nicht-ionisches Tensid enthält. Nachteilig hierbei ist jedoch die Viskositätserhöhung während der Lagerung.

Es ist daher wünschenswert, eine wässrige Zubereitung zur Herstellung eines frühwasserbeständigen Beschichtungsmittels bereitzustellen, ohne die aus dem Stand der Technik bekannten Nachteile.

Zur Lösung der Aufgabe wird eine wässrige Zubereitung enthaltend mindestens ein wässriges Hydrophobierungsmittel und mindestens ein wasserlösliches, kationisches Polymer vorgeschlagen.

Völlig unerwartet konnte festgestellt werden, dass durch die Kombination von Hydrophobierungsmitteln und wasserlöslichen, kationischen Polymeren eine Verbesserung der Frühregenbeständigkeit erreicht wird. Die mit der erfindungsgemäßen wässrigen Zubereitung hergestellte Beschichtungen wiesen eine verbesserte Frühregenbeständigkeit als herkömmliche Beschichtungen auf. Vorteilhafterweise zeigte zudem das erfindungsgemäße wässrige Beschichtungsmittel eine geringere Viskositätserhöhung während der Lagerung auf.

Dem Fachmann ist bekannt, dass durch die Zugabe eines Hydrophobierungsmittels die Hydrophobie einer Beschichtung erhöht werden kann. Auf diese Weise können Beschichtungen und somit auch die Substrate gegen das Eindringen von Wasser geschützt werden. Eine hydrophobe Beschichtung oder Oberfläche kann mittels der Bestimmung des Kontaktwinkels eines Wassertropfens charakterisiert werden, welcher zwischen 90 und 180° liegen soll (Wässrige Siliconharz-Beschichtungssysteme für Fassaden: Grundlagen, Formulierungen, Anwendung in der Praxis, Problemlösungen / Wolfgang Schultze, 2. Auflage, expert-verlag 2002, S.18). Beispielsweise kann der Kontaktwinkel mit Hilfe eines optischen Kontaktwinkelmessgerätes in Kombination mit einem Kontouranalysesystems nach DIN 55660 bestimmt werden.

Üblicherweise wird das Hydrophobierungsmittel in Form einer wässrigen Emulsion, die unter Verwendung von Emulgatoren hergestellt wurde, in die fertige Dispersion des Mahlguts eingebracht, in die dann zusätzlich das Bindemittel eingerührt wird. Solche Anstrichmittel und Putze weisen nach ihrer Applikation zunächst über eine gewisse Zeit ("Auswaschperiode") noch eine relativ hohe Wasseraufnahmefähigkeit auf, so dass die anfängliche Beständigkeit gegen Wasser eingeschränkt ist.

Die meisten Hydrophobierungsmitteln basieren auf siliziumorganischen Verbindungen, die einzeln oder in Kombination eingesetzt werden. Beispielsweise seien hier Alkoxysilane, Silikonölen, Silikonharze und Siliconate genannt (siehe auch: Wässrige Siliconharz-Beschichtungssysteme für Fassaden: Grundlagen, Formulierungen, Anwendung in der Praxis, Problemlösungen / Wolfgang Schultze, 2. Auflage, expert-verlag 2002, S. 69-74).

Bei den Alkoxysilanen handelt es sich vorzugsweise um Verbindungen gemäß Formel (I),

R¹ₐSi(OR²)_{b} Formel (I)

worin a größer gleich 0 bis kleiner gleich 2 ist, b größer gleich 2 bis kleiner gleich 4 und die Summe von a + b gleich 4 ist. R¹ ist eine gesättigte oder ungesättigte Alkylgruppe bestehend aus 1 bis 8 Kohlenstoffatomen, oder eine organische Gruppierung bestehend aus 1 bis 8 Kohlenstoffatomen und 1 bis 2 Stickstoff- oder Sauerstoffatomen, oder eine aromatische Gruppierung mit 6 bis 20 Kohlenstoffatomen und
R² = eine Alkyl- oder Acylgruppe bestehend aus 1 bis 8 Kohlenstoffatomen.

Alkylgruppen sind bevorzugt Methyl-, Ethyl-, Propyl-, Isopropyl-, n-Butyl-, s-Butyl-, t-Butyl-gruppen. Die aromatische Gruppierung ist bevorzugt eine Phenyl-Gruppierung. Bevorzugte Substituenten R¹ sind Methyl- oder Phenyl- bzw. Mischungen aus Methyl- und Phenyl-Resten. Bevorzugte Alkylgruppen des Restes R² sind Methyl-, Ethyl-, Propyl-, Isopropyl-, n-Butyl-, s-Butyl-, oder t-Butyl-Gruppen. Bevorzugt handelt es sich bei dem Alkoxysilan um Octyltriethoxysilan.

Bei den Silikonölen handelt es sich vorzugsweise um Verbindungen gemäß Formel (II),

R³O(Si(R⁴)₂O)ₙR³ Formel (II)

Bei R³ handelt es sich, unabhängig voneinander, um ein Wasserstoffatom, eine Trimethylsilyl- oder Alkylgruppe, beispielsweise eine Methyl- oder Ethylgruppe. Bei R⁴ handelt es sich um, unabhängig voneinander, gleich oder verschieden lineare oder verzweigte, gesättigte wie auch ein oder mehrfach ungesättigte Alkylgruppe bestehend aus 1 bis 20 Kohlenstoffatomen, oder eine organische Gruppierung bestehend aus 1 bis 8 Kohlenstoffatomen und 1 bis 2 Stickstoff- oder Sauerstoffatomen, oder eine siliziumorganische Gruppierung bestehend aus ein Siliziumatom, 1 bis 15 Kohlenstoffatomen und 1 bis 4 Sauerstoffatomen, oder eine aromatische Gruppierung mit 6 bis 20 Kohlenstoffatomen. Bevorzugt handelt es sich bei R⁴ um eine Methyl-, eine 3-Aminopropyl-, eine N-2-(Aminoethyl)-3-aminopropyl-, eine 2-(Trimethoxysilyl)ethyl-, eine 2-(Triethoxysilyl)ethyl-, oder eine Phenylgruppe. Der Polymerisationsgrad n liegt zwischen 1 und 10,000, bevorzugt zwischen 3 und 1,000, und am meisten bevorzugt zwischen 5 und 300.

Bei den Silikonharzen handelt es sich vorzugsweise um polymere Verbindungen gemäß Formel (III),

R⁵_{c}Si(OR⁶)_{d}O_{(4-c-d)/2} Formel (III)

worin c größer gleich 0 bis kleiner gleich 2 und d größer gleich 0 bis kleiner gleich 4 sind, und die Summe von c + d kleiner 4 ist. Die R⁵ sind unabhängig voneinander, gleich oder verschieden lineare oder verzweigte, gesättigte wie auch ein oder mehrfach ungesättigte oder aromatische Kohlenwasserstoffreste, oder eine organische Gruppierung bestehend aus 1 bis 8 Kohlenstoffatomen und 1 bis 2 Stickstoff- oder Sauerstoffatomen. R⁶ ist ein Wasserstoffatom oder eine Alkylgruppe bestehend aus 1 bis 8 Kohlenstoffatomen. Bevorzugt handelt es bei R⁵ um eine Methyl-, Propyl-, Phenyl-, 3-Aminopropyl- oder Octylgruppe. Bevorzugt handelt es sich bei R⁶ um ein Wasserstoffatom, eine Methyl- oder Ethylgruppe.

Bei Formel (III) handelt es sich um die kleinste Einheit der gemittelten Strukturformel des Silikonharzes.

Bevorzugt handelt es sich bei dem Hydrophobierungsmittel um eine wässrige Silikonharzemulsion, eine Silikonölemulsion, eine Emulsion oder Mikroemulsion eines aminofunktionellen Silikonöls, eine Silanemulsion, oder Gemische daraus.

Bevorzugt kann es sich bei dem Hydrophobierungsmittel auch um eine wässrige Emulsion basierend auf zwei oder mehr siliziumorganische Verbindungen handeln.

Generell können alle kommerziell erhältlichen Hydrophobierungsmittel in Frage kommen, sofern sie in wässrigen Beschichtungsmittel verwendet werden können. Handelsübliche Hydrophobierungsmittel sind hierzu nennen: Tego Phobe^{®} 1401, 1409, 1650, 1659, 6510 und 6600 von Evonik, Silres^{®} BS45, BS54, BS60, BS6042, BS1001 und BS1306 von Wacker, Dowsil^{®} IE 2404, IE 6683, IE 6694 und Z-70 Emulsion von Dow, Variphob^{®} SR 550, SR 580, HP 105, HP 120 von CHT, Bluesil BP 9710, BP 9878, BP 9800, BP 9821, BP 9900, BP 9705, PB 9920 von Elkem Silicones und Silsan^{®} CC55, HSB, DSH, WS 1800, 1300 und 1350 von Graf Chemicals.

Vorzugsweise weist das wasserlösliche, kationische Polymer quaternäre Ammoniumgruppen auf.

Als wasserlösliches, kationisches Polymer eignen sich bevorzugt solche Verbindungen ausgewählt aus Poly[(dimethylimino)-2-buten-1,4-diyl]chlorid (Polyquaternium-1), Poly(diallyldimethylammoniumchlorid) (Polyquaternium-6), Copolymer aus Acrylamid mit quaternisiertem Dimethylammoniumethylmethacrylate, Poly{bis(2-chlorethyl)ether-alt-1,3-bis[3(dimethylamino) propyl]urea} (Polyquaternium-2), Hydroxyethylcellulosedimethyldiallylammoniumchlorid Copolymer (Polyquaternium-4), Poly(acrylamide-methacryloyloxyethyltrimethylammonium methyl sulfat) (Polyquaternium-5), Poly(diallyldimethylammoniumchlorid-co-acrylamid) (Polyquaternium-7), quaternisierte Hydroxyethyl-cellulose (Polyquaternium-10), Copolymer aus Methyl- und Stearyldimethylaminoethylmethacrylat, quaternisiert mit Dimethylsulfat (Polyquaternium-8), Poly-N,N-(dimethylamino)ethylmethacrylat, quaternisiert mit Bromethan (Polyquaternium-9), Poly(vinylpyrrolidone-co-dimethylaminoethylmethacrylat, quaternisiert) (Polyquaternium-11), Poly(Ethylmethacrylat-co-Abietylmethacrylat-co-Diethylaminoethylmethacrylat) quaternisiert mit Dimethylsulfat (Polyquaternium-12), Poly(Ethylmethacrylat-co-Oleylmethacrylat-co- Diethylaminoethylmethacrylat) quaternisiert mit Dimethylsulfat (Polyquaternium-13), Poly(2-methacryloyloxyethyltrimethylammonium Methylsulfat) (Polyquaternium-14), Poly(Acrylamid-co-Trimethylammoniumchloridethylmethacrylat) (Polyquaternium-15), 3-Methyl-1-vinylimidazoliumchlorid-N-vinylpyrrolidone Copolymer (Polyquaternium-16), Poly[oxy-1,2-ethanediyl(dimethyliminio)-1,3-propanediylimino(1,6-dioxo-1,6-hexanediyl)imino-1,3-propanediyl(dimethyliminio)-1,2-ethanediyl Dichlorid] (Polyquaternium-17), Poly[oxy-1,2-ethanediyl(dimethyliminio)-1,3-propanediylimino(1,9-dioxo-1,9-nonanediyl)imino-1,3-propanediyl(dimethyliminio)-1,2-ethanediyl Chlorid (Polyquaternium-18), Poly(diallyldimethylammoniumchlorid-acrylsäure) (Polyquaternium-22), Cellulose, Ether mit α-[3-(dodecyldimethylammonio)-2-hydroxypropyl]-ω-hydroxypoly(oxy-1,2-ethanediyl), chlorid (Polyquaternium-24), N-Vinyl-2-pyrrolidone-3-methacrylamidopropyltrimethylammoniumchlorid Copolymer (Polyquaternium-28), 2-Propenoic acid, 2-methyl-, methyl ester, Polymer mit N-(carboxymethyl)-N,N-dimethyl-2-[(2-methyl-1-oxo-2-propenyl)oxy]ethanaminium Zwitterion (Polyquaternium-30), 2-Acryloxyethyltrimethylammoniumchlorid-acrylamid Copolymer (Polyquaternium-33), 2-Propensäure, 2-methyl-, methyl ester, Polymer aus 2-(Dimethylamino)ethyl 2-methyl-2-propenoat, Verbindung mit Dimethylsulfat (Polyquaternium-36), Poly(2-methacryloxyethyltrimethylammoniumchlorid) (Polyquaternium-37), Acrylsäure-acrylamiddimethyldiallylammoniumchlorid Copolymer (Polyquaternium-39), Poly[oxyethylene(dimethylamino)ethylen(dimethylamino)ethylendichlorid] (Polyquaternium-42), 3-Methyl-1-vinylimidazolium methylsulfat-N-vinylpyrrolidone Copolymer (Polyquaternium-44), 3-Methyl-N-vinylimidazolium methylsulfat-N-vinylcaprolactam-N-vinyl-2-pyrrolidone Copolymer (Polyquaternium-46), Acrylsäure-methacrylamidopropyl trimethylammoniumchlorid-methylacrylate Copolymer (Polyquaternium-47), N-Methacryloyloxyethyl-N,N-Dimethylammonium α-N-methylcarboxybetaine Polymer (Polyquaternium-50), Butylmethacrylate-2-methacryloyloxyethylphosphorylcholine Copolymer (Polyquaternium-51), N,N-Dimethylacrylamid-dimethylaminoethyl methacrylate diethylsulfate-polyethyleneglycol dimethacrylate Copolymer (Polyquaternium-52), Poly(acrylamid-methacrylamidopropyltrimethylammonium Chlorid-acrylsäure) (Polyquaternium-53), 1-Dodecanaminium, N,N-dimethyl-N-[3-[(2-methyl-1-oxo-2-propenyl)amino]propyl]-, Chlorid, Polymer mit N-[3-(dimethylamino)propyl]-2-methyl-2-propenamid und 1-Ethenyl-2-pyrrolidinone (Polyquaternium-55), 2-(Methacryloyloxy)ethyl-2-(trimethylammonium)ethyl phosphat-stearyl methacrylate Copolymer (Polyquaternium-61), Poly (acrylamid-acrylsäureacryloyloxyethyl trimethyl ammonium chlorid) (Polyquaternium-63), 2-Hydroxy-3-methacryloxypropyltrimethylammonium chlorid-2-methacryloxyethyl phosphorylcholine Copolymer (Polyquaternium-64), Cellulose, 2-[3-(Dodecyldimethylammonio)-2-hydroxypropoxy]ethyl 3-(dodecyldimethylammonio)-2-hydroxypropyl 2-hydroxyethyl 2-[2-hydroxy-3-(trimethylammonio)propoxy]ethyl 2-hydroxy-3-(trimethylammonio)propyl ether, chlorid (Polyquaternium-67), Methacrylamide-N-vinylimidazole-N-vinylimidazole Methosulfate-N-vinyl-2-pyrrolidone Copolymer (Polyquaternium-68), 1-Dodecanaminium, N,N-dimethyl-N-[3-[(2-methyl-1-oxo-2-propenyl)amino]propyl]-, chlorid, Polymer mit N-[3-(dimethylamino)propyl]-2-methyl-2-propenamid, 1-ethenylhexahydro-2H-azepin-2-on und 1-ethenyl-2-pyrrolidinone (Polyquaternium-69), 1-Propanaminium, N,N,N-trimethyl-3-[(1-oxo-2-propen-1-yl)amino]-, chlorid (1:1), Polymer mit N,N-dimethyl-2-propenamid, 2-hydroxyethyl 2-methyl-2-propenoat und N,N,N-trimethyl-2-[(2-methyl-1-oxo-2-propen-1-yl)oxy]ethanaminium chlorid (1:1) (Polyquaternium-84), 1H-Imidazolium, 1-ethenyl-3-methyl-, chlorid (1:1), Polymer mit 1-Ethenyl-1H-imidazol, 1-Ethenyl-2-pyrrolidinone und 2-Methyl-2-propensäure (Polyquaternium-86), Acrylsäure-ethyl acrylat-(3-methacrylamidopropyl)trimethylammonium chlorid Copolymer (Polyquaternium-98), Ethanaminium, N,N,N-trimethyl-2-[(2-methyl-1-oxo-2-propen-1-yl)oxy]-, chlorid (1:1), Polymer mit Butyl 2-methyl-2-propenoate und 2-Ethoxyethyl-2-methyl-2-propenoat (Polyquaternium-99), Poly[(dimethyliminio)(2-hydroxy-1,3-propanediyl)(dimethyliminio)-1,6-hexanediyl Dichlorid] (Polyquaternium-100), 2-Methacryloyloxyethyl phosphorylcholine-3-N,N-dimethylaminopropyl acrylamid-stearyl methacrylate Copolymer (Polyquaternium-107), 2-Propen-1-aminium, N,N-dimethyl-N-2-propen-1-yl-, chlorid (1:1), Polymer mit 2-Hydroxy-1-methylethyl-2-propenoate und 2-Propensäure (Polyquaternium-111), quaternisierte Polysacchariden und Polysaccharidederivaten wie beispielweise Guar Hydroxypropyltrimethylammoniumchlorid und Hydroxypropylguar Hydroxypropyltrimethylammoniumchlorid, Chitosan Hydroxypropyltrimethylammoniumchlorid, Stärke 3-(dodecyldimethylammonio)-2-hydroxypropyl 2-hydroxy-3-(trimethylammonio)propylether Chlorid (Polyquaternium-75) und Hydroxypropyltrimethylammoniumchlorid Stärke.

Besonders bevorzugt sind Poly(diallyldimethylammoniumchlorid), und quaternisierte Hydroxyethyl-cellulose. Am meisten bevorzugt ist Poly(diallyldimethylammoniumchlorid).

Bevorzugt weist das wasserlösliche, kationische Polymer Aminogruppen auf. Besonders bevorzugt handelt es sich hierbei um Polyethylenimin.

Das Gewichtsmittel des Molekulargewichtes des wasserlöslichen, kationischen Polymers liegt bevorzugt im Bereich von 10 000 g/mol bis 2 000 000 g/mol, besonderes bevorzugt im Bereich von 20 000 g/mol bis 1 000 000 g/mol und ganz besonderes bevorzugt im Bereich von 30 000 g/mol bis 500 000 g/mol

Vorzugsweise weist die wässrige Zubereitung 0,05 Gew.-% - 5,0 Gew.-%, bevorzugt 0,1 Gew.-% - 3,0 Gew.-%, besonders bevorzugt 0,2 Gew.-% - 2,0 Gew.-% des kationischen Polymers bezogen auf die Zubereitung auf.

Eine weitere Erfindung ist die Verwendung der erfindungsgemäßen, wässrigen Zubereitung als Additiv zur Herstellung wässriger Beschichtungsmitteln mit verbesserter Frühregenbeständigkeit.

Auch Gegenstand der Erfindung sind Beschichtungsmitteln enthaltend eine erfindungsgemäße, wässrige Zubereitung.

Vorzugsweise enthält das Beschichtungsmittel neben der erfindungsgemäßen wässrigen Zubereitung, gegebenenfalls noch Filmbildehilfsmittel, Pigmente, Füllstoffe, Verdickungsmittel, Verlaufsmittel, Dispergiermittel, Netzmittel, Konservierungsmittel, Emulgatoren, Schutzkolloide und/oder Entschäumer.

Bei den erfindungsgemäßen Beschichtungsmitteln handelt es sich bevorzugt um Putze, Farben, Grundierungen oder Holzanstrichmittel für Außenanwendungen. Besonders bevorzugt handelt es sich bei den erfindungsgemäßen Beschichtungsmitteln um Kunstharzputze, Fassadenfarben, Straßenmarkierungsfarben oder Holzschutzfarben.

Gegenstand der vorliegenden Erfindung ist auch ein Verfahren zur Herstellung eines frühwasserbeständigen Beschichtungsmittels, wobei
a) zunächst eine wässrige Zubereitung hergestellt wird, bestehend aus mindestens einem wässrigen Hydrophobierungsmittel und mindestens einer wässrigen, kationischen Polymerlösung, wobei dessen gewichtsmittleres Molekulargewicht im Bereich von 10 000 g/mol bis 1 000 000 g/mol liegt,
b) danach in die nach a) erhaltene Zubereitung mindestens ein wässriges Bindemittel hinzugegeben wird und
c) gegebenenfalls ein Emulgator oder ein Gemisch von Emulgatoren, Filmbildehilfsmittel, Pigmente, Füllstoffe, Verdickungsmittel, Verlaufsmittel, Schutzkolloide, Dispergiermittel, Netzmittel, Konservierungsmittel und/oder Entschäumer hinzugefügt wird.

Überraschenderweise wurde nun gefunden, dass die nach dem erfindungsgemäßen Verfahren hergestellte Beschichtung eine verbesserte Frühregenbeständigkeit aufwies als herkömmliche Beschichtungen.

Bei dem Bindemittel kann es sich selbstverständlich auch um ein Gemisch verschiedener Bindemittel handeln.

Der Gewichtsanteil an Bindemittel (fest) im Beschichtungsmittel beträgt bevorzugt zwischen 1,0 - 50,0 Gew.-% und besonders bevorzugt zwischen 3,0 - 25,0 Gew.-%, bezogen auf das Gewicht an trockenem Material im Beschichtungsmittel.

Vorzugsweise wird das wässrige Bindemittel als letzter Bestandteil zu der Mischung gegeben, falls ein Emulgator oder ein Gemisch von Emulgatoren, Filmbildehilfsmittel, Pigmente, Füllstoffe, Verdickungsmittel, Verlaufsmittel, Schutzkolloide, Dispergiermittel, Netzmittel, Konservierungsmittel und/oder Entschäumer eingesetzt wird.

Bei den Bindemitteln handelt es sich bevorzugt um wässrige Polymerdispersionen auf Basis von Homo- und/oder Copolymerisaten.

Besonders bevorzugte Homo- und Copolymerisate enthalten mindestens ein olefinisch ungesättigtes Monomer als Monomerbaustein.

Insbesondere bevorzugt sind Copolymerisate, die 70 bis 99,7 Gew.-%, bezogen auf die Gesamtmenge der Monomere, radikalisch polymerisierbare olefinisch ungesättigte Verbindungen aus der Gruppe der Acryl- und Methacrylsäureester von (C1 bis C12)-Monoalkoholen, vorzugsweise von (C1 bis C8)-Monoalkoholen, beispielsweise Methanol, Ethanol, iso-Propanol, iso-Butanol, n-Butanol und 2-Ethylhexylalkohol, der vinylaromatischen Monomere, beispielweise Styrol, der Vinylester von (C1 bis C12)-Alkanmonocarbonsäuren, beispielsweise Vinylacetat, Vinylpropionat, Vinyl-n-butyrat, Vinyllaurat, VeoVa^{®} 9 und VeoVa^{®} 10, der Vinylhalogenide, beispielsweise Vinylchlorid und Vinylidenchlorid, der α- und β-mono-olefinisch ungesättigten Nitrile, beispielsweise Acrylnitril und Methacrylnitril, sowie der Alkylester von mono-olefinisch ungesättigten Dicarbonsäuren, beispielsweise Malein- und Fumarsäuredi-n-butylester, enthalten. Die Copolymerisate enthalten vorzugsweise außerdem 0,3 bis 10 Gew.-%, besonders bevorzugt 0,5 bis 5 Gew.-%, bezogen auf die Gesamtmenge der Monomere, α- und β-mono-olefinisch ungesättigte Mono- und Dicarbonsäuren, beispielsweise Acrylsäure, Methacrylsäure, Itaconsäure, Maleinsäure und Fumarsäure, sowie deren gegebenenfalls an den Stickstoffatomen substituierte Amide, beispielsweise Acrylamid, Methacrylamid, N-Methylolacrylamid und N-Butoxymethacrylamid.

Weiterhin können 0 bis 20 Gew.-%, vorzugsweise 0,5 bis 5 Gew.-%, bezogen auf die Gesamtmenge der Monomere, funktionelle Monomere in den Copolymerisaten enthalten sein, wie beispielsweise hydroxylgruppen-haltige Monomere, wie Hydroxyalkylacrylate und -methacrylate, insbesondere Hydroxyethylmethacrylat und Hydroxypropylmethacrylat, und/oder die Naßhaftung verbessernde Acetylacetoxygruppen-haltige Monomere, insbesondere Allylacetoacetat, Acetylacetoxyethylmethacrylat und Acetylacetoxybutylmethacrylat, und/oder vernetzend wirkende Monomere wie Epoxidgruppen-haltige und Silangruppenhaltige Monomere, insbesondere Glycidylacrylat, Glycidylmethacrylat, Vinyltrimethoxysilan und Methacryloxypropyltrimethoxysilan, und/oder stickstoffhaltige Monomere aus der Gruppe der polymerisierbaren Monomere mit einer Amino-, Ureido- oder N-heterocyclischen-Gruppe, beispielsweise Dimethylaminoethylacrylat und -methacrylat, N-(2-Methacryloylethyl)-ethylenharnstoff, und/oder Ketogruppen-haltige Monomere, beispielsweise Diacetonacrylamid, Diacetonmethacrylamid, Acrolein und 2-Butanonmethacrylsäureester.

In selbstvernetzenden Dispersionen können ketogruppen-haltige Polymerisate noch bis zu 5 Gew.-%, bezogen auf die Gesamtmenge der Monomere, beziehungsweise eines di- oder polyfunktionellen Carbonsäurehydrazids, beispielsweise Adipinsäurehydrazid, enthalten sein.

Bevorzugt handelt es sich bei den als Bindemittel verwendeten Polymerdispersionen um anionisch stabilisierte Polymerdispersionen oder Polymerdispersionen, die mit Mischungen aus nichtionischen und anionischen Stabilierungsmitteln oder Mischungen aus nichtionischen Emulgatoren, anionischen Emulgatoren und Schutzkolloiden stabilisiert sind.

Als nichtionische Emulgatoren sind z.B. Alkylpolyglykolether oder Alkoxylierungsprodukte von Polypropylenoxid geeignet. Als anionische Emulgatoren kommen in erster Linie die Alkali- oder Ammoniumsalze von Alkyl-, Aryl- oder Alkylarylsulfonaten, -sulfaten, -phosphaten oder -phosphonaten in Frage.

Als Schutzkolloide eignen sich Naturstoffe, wie z. B. Gummiarabicum, Stärke und Alginate, modifizierte Naturstoffe, wie z.B. Cellulosederivate, oder synthetische Polymere, wie z.B. Polyvinylalkohol und Polyvinylpyrrolidon, oder Gemische derselben.

Neben Emulgatoren und Schutzkolloiden können die Polymerdispersionen gegebenenfalls noch Additive, Hilfsstoffe und/oder nichtcopolymerisierbare Vernetzer enthalten.

Vorzugsweise wird eine wässrige Zubereitung mit 0,05 Gew.-% - 5,0 Gew.-%, bevorzugt 0,1 Gew.-% - 3,0 Gew.-%, besonders bevorzugt 0,2 Gew.-% - 2,0 Gew.-% des kationischen Polymers bezogen auf die Zubereitung für das erfindungsgemäße Verfahren eingesetzt.

Vorzugsweise weist das kationische Polymer quaternäre Ammoniumgruppen auf.

Als wasserlösliches, kationisches Polymer eignen sich bevorzugt solche Verbindungen ausgewählt aus Poly[(dimethylimino)-2-buten-1,4-diyl]chlorid (Polyquaternium-1), Poly(diallyldimethylammoniumchlorid) (Polyquaternium-6), Copolymer aus Acrylamid mit quaternisiertem Dimethylammoniumethylmethacrylate, Poly{bis(2-chlorethyl)ether-alt-1,3-bis[3(dimethylamino) propyl]urea} (Polyquaternium-2), Hydroxyethylcellulosedimethyldiallylammoniumchlorid Copolymer (Polyquaternium-4), Poly(acrylamide-methacryloyloxyethyltrimethylammonium methyl sulfat) (Polyquaternium-5), Poly(diallyldimethylammoniumchlorid-co-acrylamid) (Polyquaternium-7), quaternisierte Hydroxyethyl-cellulose (Polyquaternium-10), Copolymer aus Methyl- und Stearyldimethylaminoethylmethacrylat, quaternisiert mit Dimethylsulfat (Polyquaternium-8), Poly-N,N-(dimethylamino)ethylmethacrylat, quaternisiert mit Bromethan (Polyquaternium-9), Poly(vinylpyrrolidone-co-dimethylaminoethylmethacrylat, quaternisiert) (Polyquaternium-11), Poly(Ethylmethacrylat-co-Abietylmethacrylat-co-Diethylaminoethylmethacrylat) quaternisiert mit Dimethylsulfat (Polyquaternium-12), Poly(Ethylmethacrylat-co-Oleylmethacrylat-co- Diethylaminoethylmethacrylat) quaternisiert mit Dimethylsulfat (Polyquaternium-13), Poly(2-methacryloyloxyethyltrimethylammonium Methylsulfat) (Polyquaternium-14), Poly(Acrylamid-co-Trimethylammoniumchloridethylmethacrylat) (Polyquaternium-15), 3-Methyl-1-vinylimidazoliumchlorid-N-vinylpyrrolidone Copolymer (Polyquaternium-16), Poly[oxy-1,2-ethanediyl(dimethyliminio)-1,3-propanediylimino(1,6-dioxo-1,6-hexanediyl)imino-1,3-propanediyl(dimethyliminio)-1,2-ethanediyl Dichlorid] (Polyquaternium-17), Poly[oxy-1,2-ethanediyl(dimethyliminio)-1,3-propanediylimino(1,9-dioxo-1,9-nonanediyl)imino-1,3-propanediyl(dimethyliminio)-1,2-ethanediyl Chlorid (Polyquaternium-18), Poly(diallyldimethylammoniumchlorid-acrylsäure) (Polyquaternium-22), Cellulose, Ether mit α-[3-(dodecyldimethylammonio)-2-hydroxypropyl]-ω-hydroxypoly(oxy-1,2-ethanediyl), chlorid (Polyquaternium-24), N-Vinyl-2-pyrrolidone-3-methacrylamidopropyltrimethylammoniumchlorid Copolymer (Polyquaternium-28), 2-Propenoic acid, 2-methyl-, methyl ester, Polymer mit N-(carboxymethyl)-N,N-dimethyl-2-[(2-methyl-1-oxo-2-propenyl)oxy]ethanaminium Zwitterion (Polyquaternium-30), 2-Acryloxyethyltrimethylammoniumchlorid-acrylamid Copolymer (Polyquaternium-33), 2-Propensäure, 2-methyl-, methyl ester, Polymer aus 2-(Dimethylamino)ethyl 2-methyl-2-propenoat, Verbindung mit Dimethylsulfat (Polyquaternium-36), Poly(2-methacryloxyethyltrimethylammoniumchlorid) (Polyquaternium-37), Acrylsäure-acrylamiddimethyldiallylammoniumchlorid Copolymer (Polyquaternium-39), Poly[oxyethylene(dimethylamino)ethylen(dimethylamino)ethylendichlorid] (Polyquaternium-42), 3-Methyl-1-vinylimidazolium methylsulfat-N-vinylpyrrolidone Copolymer (Polyquaternium-44), 3-Methyl-N-vinylimidazolium methylsulfat-N-vinylcaprolactam-N-vinyl-2-pyrrolidone Copolymer (Polyquaternium-46), Acrylsäure-methacrylamidopropyl trimethylammoniumchlorid-methylacrylate Copolymer (Polyquaternium-47), N-Methacryloyloxyethyl-N,N-Dimethylammonium α-N-methylcarboxybetaine Polymer (Polyquaternium-50), Butylmethacrylate-2-methacryloyloxyethylphosphorylcholine Copolymer (Polyquaternium-51), N,N-Dimethylacrylamid-dimethylaminoethyl methacrylate diethylsulfate-polyethyleneglycol dimethacrylate Copolymer (Polyquaternium-52), Poly(acrylamid-methacrylamidopropyltrimethylammonium Chlorid-acrylsäure) (Polyquaternium-53), 1-Dodecanaminium, N,N-dimethyl-N-[3-[(2-methyl-1-oxo-2-propenyl)amino]propyl]-, Chlorid, Polymer mit N-[3-(dimethylamino)propyl]-2-methyl-2-propenamid und 1-Ethenyl-2-pyrrolidinone (Polyquaternium-55), 2-(Methacryloyloxy)ethyl-2-(trimethylammonium)ethyl phosphat-stearyl methacrylate Copolymer (Polyquaternium-61), Poly (acrylamid-acrylsäureacryloyloxyethyl trimethyl ammonium chlorid) (Polyquaternium-63), 2-Hydroxy-3-methacryloxypropyltrimethylammonium chlorid-2-methacryloxyethyl phosphorylcholine Copolymer (Polyquaternium-64), Cellulose, 2-[3-(Dodecyldimethylammonio)-2-hydroxypropoxy]ethyl 3-(dodecyldimethylammonio)-2-hydroxypropyl 2-hydroxyethyl 2-[2-hydroxy-3-(trimethylammonio)propoxy]ethyl 2-hydroxy-3-(trimethylammonio)propyl ether, chlorid (Polyquaternium-67), Methacrylamide-N-vinylimidazole-N-vinylimidazole Methosulfate-N-vinyl-2-pyrrolidone Copolymer (Polyquaternium-68), 1-Dodecanaminium, N,N-dimethyl-N-[3-[(2-methyl-1-oxo-2-propenyl)amino]propyl]-, chlorid, Polymer mit N-[3-(dimethylamino)propyl]-2-methyl-2-propenamid, 1-ethenylhexahydro-2H-azepin-2-on und 1-ethenyl-2-pyrrolidinone (Polyquaternium-69), 1-Propanaminium, N,N,N-trimethyl-3-[(1-oxo-2-propen-1-yl)amino]-, chlorid (1:1), Polymer mit N,N-dimethyl-2-propenamid, 2-hydroxyethyl 2-methyl-2-propenoat und N,N,N-trimethyl-2-[(2-methyl-1-oxo-2-propen-1-yl)oxy]ethanaminium chlorid (1:1) (Polyquaternium-84), 1H-Imidazolium, 1-ethenyl-3-methyl-, chlorid (1:1), Polymer mit 1-Ethenyl-1H-imidazol, 1-Ethenyl-2-pyrrolidinone und 2-Methyl-2-propensäure (Polyquaternium-86), Acrylsäure-ethyl acrylat-(3-methacrylamidopropyl)trimethylammonium chlorid Copolymer (Polyquaternium-98), Ethanaminium, N,N,N-trimethyl-2-[(2-methyl-1-oxo-2-propen-1-yl)oxy]-, chlorid (1:1), Polymer mit Butyl 2-methyl-2-propenoate und 2-Ethoxyethyl-2-methyl-2-propenoat (Polyquaternium-99), Poly[(dimethyliminio)(2-hydroxy-1,3-propanediyl)(dimethyliminio)-1,6-hexanediyl Dichlorid] (Polyquaternium-100), 2-Methacryloyloxyethyl phosphorylcholine-3-N,N-dimethylaminopropyl acrylamid-stearyl methacrylate Copolymer (Polyquaternium-107), 2-Propen-1-aminium, N,N-dimethyl-N-2-propen-1-yl-, chlorid (1:1), Polymer mit 2-Hydroxy-1-methylethyl-2-propenoate und 2-Propensäure (Polyquaternium-111), quaternisierte Polysacchariden und Polysaccharidederivaten wie beispielweise Guar Hydroxypropyltrimethylammoniumchlorid und Hydroxypropylguar Hydroxypropyltrimethylammoniumchlorid, Chitosan Hydroxypropyltrimethylammoniumchlorid, Stärke 3-(dodecyldimethylammonio)-2-hydroxypropyl 2-hydroxy-3-(trimethylammonio)propylether, Chlorid (Polyquaternium-75) und Hydroxypropyltrimethylammoniumchlorid Stärke.

Bevorzugt ist das kationische Polymer ausgewählt aus Poly(diallyldimethylammoniumchlorid) und quaternisierte Hydroxyethyl-cellulose. Am meisten bevorzugt ist Poly(diallyldimethylammoniumchlorid).

Bevorzugt können wasserlösliche, kationische Polymere enthaltend Aminogruppen, besonders bevorzugt Polyethylenimin, für das erfindungsgemäße Verfahren eingesetzt werden.

Vorzugsweise wird das wässrige Bindemittel als letzter Bestandteil zu der Mischung gegeben.

Die Erfindung wird im Folgenden von Ausführungsbeispielen näher beschrieben, ohne dadurch jedoch beschränkt zu werden.

### Methoden

### Gelpermeationschromatographie (GPC)

Bei dem beschriebenen Verfahren handelt es sich nicht um ein Absolutverfahren. Vielmehr ist eine Kalibrierung, die mit kommerziell verfügbaren, linear aufgebauten und nach unabhängigen Absolutverfahren charakterisierten Poly-2-vinylpyridin-Standards durchgeführt wird, notwendig. Instrument: Agilent 1100 von Agilent Technologie, Vorsäule: PSS NOVEMA Max, 10µm, Guard, ID 8.00mm x 50.00mm, Säule: PSS NOVEMA Max Ultrahigh, 10µm, ID 8.00mm x 300.00mm, Temperatur 35 °C, Eluent: 0,1 M NaCl, 0,1 vol% TFA (aq.), Fließrate 1 mL/min, Probenkonzentration 3 g/L. RI-Detektor, Auswertung gegen einen Poly-2-vinylpyridin Standard im Molmassenbereich von 620 - 2,890,000 g.mol⁻¹.

### Bestimmung der Viskosität

Viskositäten wurden angelehnt an DIN 53019-1 mit einem MR301 Rheometer der Fa. Anton Paar mit Platte-Kegel Geometrie, bei einer Scherung von 100 s⁻¹ gemessen.

### Weitere Bedingungen

Werden im Rahmen der vorliegenden Erfindung %-Angaben gemacht, so handelt es sich, wenn nicht anderes angegeben, um Angaben in Gewichts-%. Bei Zusammensetzungen beziehen sich die Prozentangaben, sofern nicht anders definiert, auf die Gesamtzusammensetzung. Werden in den nachfolgenden Beispielen Mittelwerte genannt, so handelt es sich, wenn nichts anderes angegeben, um Zahlenmittel. Werden nachfolgend Beschichtungen getrocknet, so geschieht dies, sofern nicht anders definiert, ebenfalls bei einem Druck von 101325 Pa, einer Temperatur von 20 °C und der umgebenden relativen Luftfeuchtigkeit von ca. 40 %.

### Materialien und Geräte

- RM 10W Rollenmischer, Fa. CAT
- Schwarzer PVC-Folie (Leneta)
- Filmaufziehgerät Coatmaster 509 MC, Fa. Erichsen
- ZAF 2010 Kastenrakel, Fa. Zehnter
- Klimaschrank HPP110eco, Fa. Memmert
- Sigma Siloxan All Season Farbe, Fa. PPG
- Sprühflasche mit Pumpzerstäuber, Fa. Technical Treatments
- Dispermat mit 30 mm Dispergierscheibe, Fa. VMA Getzmann
- TEGO Phobe^{®} 1650, Fa. Evonik
- TEGO Phobe^{®} 1409, Fa. Evonik

### Beispiele

### 1. Herstellung der erfindungsgemäßen wässrigen Zubereitung

### 1.1 Kationische Polymerlösungen

Tabelle 1 führt die verwendeten, kommerziell erhältlichen wässrigen kationischen Polymerlösungen mit ihren per GPC ermittelten gewichtsmittleren Molekulargewichte Mw (Pos. P1 bis P4) auf. Quaternisierte Hydroxyethylcellulose ist als Pulver erhältlich, so dass eine wässrige Polymerlösung hergestellt werden musste. Dazu wurde das pulverförmige, 100%ige Polymer mit VE-Wasser in einem 50 mL Schraubdeckelglas manuell mit einem Spatel gemischt und 24 Stunden auf einem RM 10W Rollenmischer gelegt. Es entstand eine homogene und klare Lösung, die 20 Gew.-% des kationischen Polymers enthielt (Pos.P5).

**Tabelle 1: Verwendete kationische Polymerlösungen**

| Pos. | Namen | Konz. Gew.-% | Bezugsquelle | Mw g/mol |
|---|---|---|---|---|
| P1 | Poly(diallyldimethylammoniumchlorid) C40L / Polyquaternium-6 | 40 | Trigon-Chemie | 73700 |
| P2 | Poly(diallyldimethylammoniumchlorid) C40H / Polyquaternium-6 | 40 | Trigon-Chemie | 125000 |
| P3 | Poly(diallyldimethylammoniumchlorid) low molecular weight / Polyquaternium-6 | 35 | Sigma-Aldrich | 42500 |
| P4 | Poly(diallyldimethylammoniumchlorid) medium molecular weight / Polyquaternium-6 | 20 | Sigma-Aldrich | 200000 |
| P5 | Hydroxyethylcelluloseethoxylate, quaternisiert / Polyquaternium-10 | 20 | Sigma-Aldrich | 398000 |

### 1.2 Verwendete Hydrophobierungsmittel

Es wurden folgende, handelsübliche Hydrophobierungsmittel verwendet:
- TEGO Phobe^{®} 1650, Fa. Evonik → (H1)
- TEGO Phobe^{®} 1409, Fa. Evonik → (H2)

Für die Herstellung der erfindungsgemäßen, wässrigen Zubereitung wurde in einem 180 mL Polyethylenbecher 100 g H1 abgewogen. Anschließend wurde die kationische Polymerlösung aus Tabelle 1 entsprechend der Konzentration aus Tabelle 2 unter Rühren mit einem Dispermat bei 500 U/Min tropfenweise zugegeben.

**Tabelle 2: Rezeptur der erfindungsgemäßen Zubereitungen mit H1**

| **Zubereitung** | **Kationische Polymerlösung** | **Konz. / %** |
|---|---|---|
| Z 1-H1 | P1 | 2,0 |
| Z 2-H1 | P2 | 2,0 |
| Z 3-H1 | P3 | 2,0 |
| Z 4-H1 | P4 | 2,0 |
| Z 5-H1 | P5 | 2,0 |

### 2. Bestimmung der Frühregenbeständigkeit einer Fassadenfarbe

### 2.1 Herstellung von Fassadenfarben

In einem 180 mL Polyethylenbecher wurden Pos. 1 und 2 der Tabelle 3 gegeben und für 5 Minuten unter Zuhilfenahme eines Dispermats mit 30 mm Dispergierscheibe bei 800 U/Min homogenisiert. Anschließend wurden Pos. 3 bis 7 unter Rühren hinzugegeben und für 10 Minuten eingearbeitet, dabei wurde die Umdrehungszahl auf 1500 U/Min erhöht. Dann wurden die Pos. 8 bis 13 der Reihe nach hinzugegeben und bei 2500 U/Min dispergiert. Nach 30 Minuten wurde die Dispergierscheibe durch einen Flügelrührer ersetzt. Die Drehzahl wurde auf 800 U/Min reduziert, Pos. 14 und 15 hinzugegeben und eingearbeitet. Zuletzt wurden das Bindemittel (Pos. 16) und der Verdicker (Pos. 17) unter Rühren zugegeben. Die Mischung wurde noch 10 Minuten bei 1000 U/Min gerührt. Nach 24 Stunden wurde die Frühregenbeständigkeit bestimmt.

**Tabelle 3: Rezeptur der Fassadenfarbe**

| Pos. | Rohstoff | Hersteller | Menge (g) |
|---|---|---|---|
| 1 | VE-Wasser | - | 27,95 |
| 2 | WALOCEL^{®} XM 6000 PV | DOW | 0,3 |
| 3 | TEGO^{®} Foamex 24 | Evonik | 0,2 |
| 4 | ACTICIDE^{®} MBS | Thor | 0,15 |
| 5 | CALGON^{®} N new | Reininghaus Chemie | 0,05 |
| 6 | TEGO^{®} Dispers 715 W | Evonik | 0,3 |
| 7 | AMP-90^{™} | Angus | 0,1 |
| 8 | KRONOS^{®} 2310 | Kronos TITAN | 12,5 |
| 9 | SOCAL^{®} P3 | Imerys performance minerals | 10,0 |
| 10 | OMYACARB^{®} 5 GU | Omya | 15,0 |
| 11 | OMYACARB^{®} 2 GU | Omya | 10,0 |
| 12 | Glimmer Mica TG | Aspanger Bergbau | 3,0 |
| 13 | SIPERNAT^{®} 820 A | Evonik | 2,0 |
| 14 | DOWANOL^{®} DPnB | DOW | 1,0 |
| 15 | Erfindungsgemäße wässrige Zubereitung | Evonik | 4,8 |
| 16 | ACRONAL^{®} S790 | BASF | 12,0 |
| 17 | RHEOLATE^{®}278 TF | Elementis | 0,65 |
| | Summe | | 100,0 |

### 2.2 Bestimmung der Frühregenbeständigkeit

Unter Zuhilfenahme eines Kastenrakels mit einem 200 µm Schlitz und eines Coatmaster 509 MC Filmaufziehgerätes wurden Filme der Fassadenfarben sowie der Vergleichsfassadenfarben mit einer Geschwindigkeit von 15 mm/s auf schwarzen Lenetafolie aufgezogen. Die beschichteten Folien wurden anschließend in einem Klimaschrank gelegt, der bereits vorher auf 8 °C und 80% Luftfeuchtigkeit eingestellt war. Die Folien wurden 20 Minuten im Schrank getrocknet. Direkt danach wurde die Folie unter einem Winkel von 45° befestigt und mit Hilfe einer Sprühflasche fünfmal mit je 5,0 mL VE-Wasser bespritzt. Es wurde gewartet, bis das Wasser vollständig abgelaufen war. Die Aufzüge wurden 24 Stunden unter Standard-Laborbedingungen getrocknet, und anschließend visuell bewertet.

Als Vergleichsbeispiele dienten Vergleichsfassadenfarben VF 1, VF2 und VF 3.

VF1 wurde gemäß der Rezeptur aus Tabelle 3 hergestellt, wobei für Pos. 15 weder ein Hydrophobierungsmittel noch ein kationisches Polymer verwendet wurde.

VF2 wurde gemäß der Rezeptur aus Tabelle 3 hergestellt, wobei für Pos. 15 lediglich 4,8 Gew.-% des H1, jedoch ohne kationisches Polymer, verwendet wurde.

VF3 wurde gemäß der Rezeptur aus Tabelle 3 hergestellt, wobei zusätzlich 0,10 Gramm der kationischen Polymerlösung P4 verwendet wurde. Die Zugabe von P4 zu der Vergleichsfassadenfarbe erfolgte gemäß der Verfahrensführung aus Beispiel 1 der EP 1 250 388 B1 nachträglich unter Rühren.

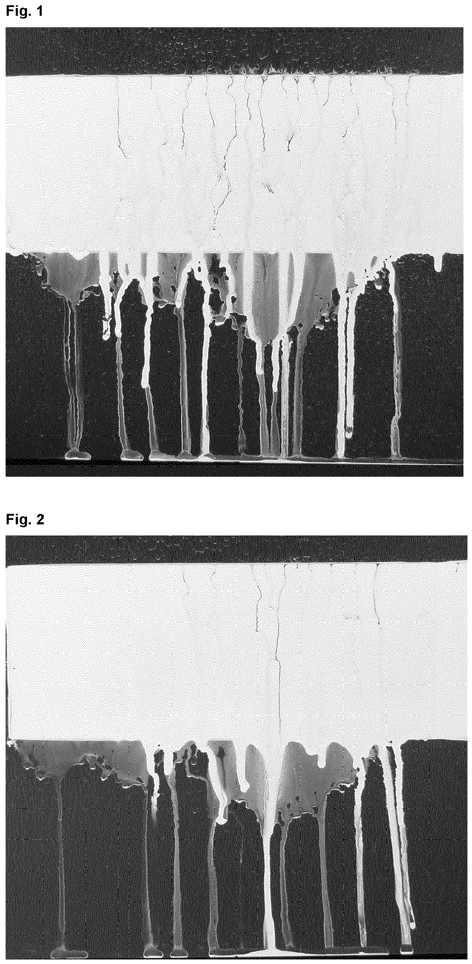

Es konnte festgestellt werden, dass die Oberfläche der VF 1 inhomogen war, mit zahlreichen Rissen. Darüber hinaus zeigte die Oberfläche zahlreiche dicke, weiße Ablaufspuren, die bis zum unteren Rand der Leneta-Folie reichten (Siehe Fig. 1). Die Frühregenbeständigkeit von VF 1 wurde als sehr schlecht bewertet.

Es konnte festgestellt werden, dass die Oberfläche der VF 2 ebenfalls inhomogen war, mit wenigen Rissen. Darüber hinaus zeigte die Oberfläche zahlreiche dicke, weiße Ablaufspuren, die bis zum unteren Rand der Leneta-Folie reichten (Siehe Fig. 2). Die Frühregenbeständigkeit von VF 2 wurde als schlecht bewertet.

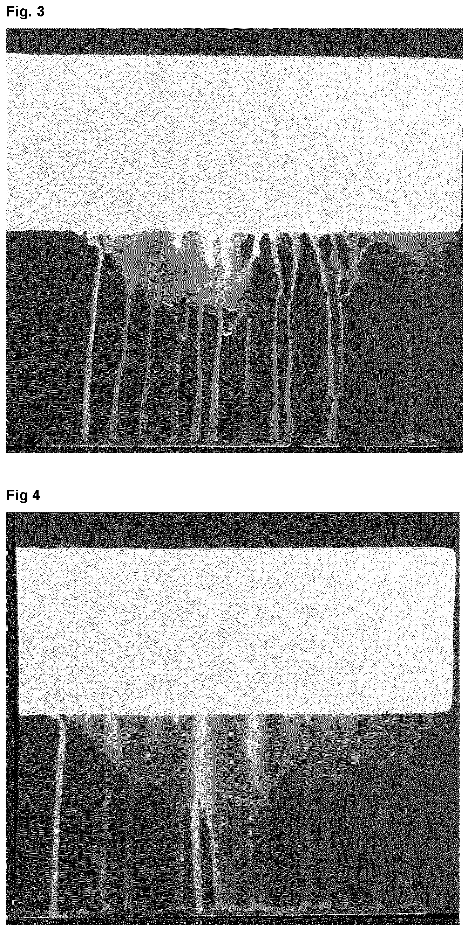

Es konnte festgestellt werden, dass die Oberfläche der VF 3 glatt und homogen war, ohne Risse. Darüber hinaus zeigte die Oberfläche wenige dicke, weiße Ablaufspuren, die nicht bis zum unteren Rand reichten (Siehe Fig. 3). Die Frühregenbeständigkeit von VF 3 wurde als mittel bewertet.

Es wurde die Frühregenbeständigkeit der erfindungsgemäßen Fassadenfarben mit den Vergleichsfassadenfarben VF1, VF2 und VF3 verglichen. Zur besseren Darstellung wurde VF1 = 1 (sehr schlecht), VF2 = 2 (schlecht) und VF3 = 3 (mittel) gesetzt.

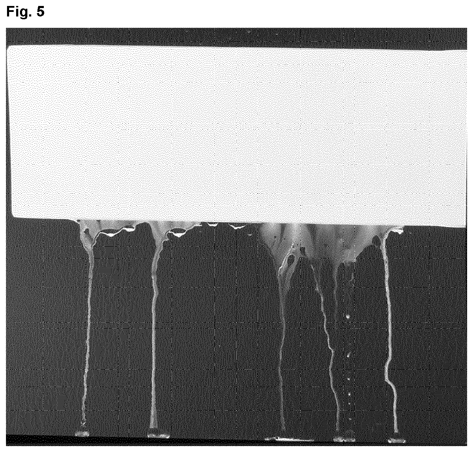

Tabelle 4 zeigt die Ergebnisse der Frühregenbeständigkeit der erfindungsgemäßen Fassadenfarben auf. Hierbei konnte festgestellt werden, dass die Oberfläche der erfindungsgemäßen Fassadenfarben F1 - F3 eine glatte, homogene Oberfläche ohne Risse mit einzelnen dünnen, weißen Ablaufspuren, die nicht bis zum unteren Rand reichten, aufwiesen. F4 und F5 wiesen eine glatte, homogene Oberfläche ohne Risse, mit einzelnen dünnen, rinnsalartigen, leicht milchig-trüben bis durchsichtigen Ablaufspuren auf, die nicht bis zum unteren Rand reichen. Exemplarisch wird hierfür auf die Fig. 4 und Fig. 5 verwiesen.

Fig. 1 - Fig. 5 zeigen exemplarische, fotografische Abbildungen der Oberfläche der Fassadenfarben.

**Tabelle 4: Visuelle Bewertung der Frühregenbeständigkeit**

| **Fassadenfarbe** | **Zubereitung** | **Bewertung** |
|---|---|---|
| F1 | Z 1-H1 | 4 |
| F2 | Z 2-H1 | 4 |
| F3 | Z 3-H1 | 4 |
| F4 | Z 4-H1 | 5 |
| F5 | Z 5-H1 | 5 |

Es konnte somit gezeigt werden, dass durch die Kombination von Hydrophobierungsmitteln und wasserlöslichen, kationischen Polymeren eine Verbesserung der Frühregenbeständigkeit erreicht wird. Die mit den erfindungsgemäßen, wässrigen Zubereitungen hergestellte Beschichtungen wiesen eine verbesserte Frühregenbeständigkeit auf als eine Beschichtung ohne Hydrophobierungsmittel und ohne wasserlösliches, kationisches Polymer, als eine Beschichtung nur mit Hydrophobierungsmittel und als eine herkömmlich hergestellte Beschichtung nur mit einem wasserlöslichen, kationischen Polymer.

### 2.3 Frühregenbeständigkeit weiterer erfindungsgemäßen Zubereitungen

Analog 1.2 wurden erfindungsgemäße Zubereitungen auf Basis des H2 mit P4 mit zwei Konzentrationen hergestellt, siehe Tabelle 5. Anschließend wurden analog zu 2.1 entsprechende Fassadenfarben gemäß Tabelle 3 hergestellt. Die Ergebnisse der Frühregenbeständigkeitsbestimmung sind aus Tabelle 6 zu entnehmen.

**Tabelle 5: Rezeptur der erfindungsgemäßen Zubereitungen mit H2 und P4**

| **Zubereitung** | **Kationische Polymerlösung** | **Konz. %** |
|---|---|---|
| Z 4.1-H2 | P4 | 1,5 |
| Z 4.2-H2 | | 2,0 |

**Tabelle 6: Frühregenbeständigkeit mit weiteren Hydrophobierungsmitteln**

| **Fassadenfarbe** | **Zubereitung** | **Einwaage (g) = 4,8** |
|---|---|---|
| F6 | Z 4.1-H2 | 4 |
| F7 | Z 4.2-H2 | 4 |

Hier konnte gezeigt werden, dass der Synergieeffekt auch mit einem anderen Hydrophobierungsmittel auftrat.

### 2.4 Bestimmung der Viskosität bei Lagerung

Um die Lagerstabilität zu beurteilen, wurde die Viskosität der Fassadenfarben gemessen. Hierfür wurde die erfindungsgemäße Fassadenfarbe F4 und als Vergleichsbeispiele VF3 und VF4 zur Bestimmung der Viskosität herangezogen. VF4 wurde ohne H1 hergestellt, wobei P4 entsprechend des Beispiels 1 der EP 1 250 388 B1 nachträglich zu der Vergleichsfassadenfarbe hinzugefügt wurde.

Die Fassadenfarben wurden bei 50 °C gelagert und die Viskosität bei Raumtemperatur nach 24 Stunden, nach einer Woche und nach 2 Wochen gemessen. Die Ergebnisse sind in den Tabelle 7 aufgelistet.

**Tabelle 7: Viskosität bei Lagerung**

| Fassadenfarbe | Viskosität (mPa.s) | | |
|---|---|---|---|
| | 24 h | 1 W | 2W |
| F4 | 1134 | 1280 | 1291 |
| VF3 | 1174 | 1406 | 1346 |
| VF4 | 1256 | 1944 | 2317 |

Es hat sich herausgestellt, dass die Viskosität der erfindungsgemäßen Fassadenfarbe, hergestellt mit der erfindungsgemäßen Zubereitung, während der Lagerung deutlich geringer ansteigt als bei den Vergleichsbeispielen. Somit kann eine positive Aussage über die Lagerstabilität der Fassadenfarbe getroffen werden.

## Patentansprüche

1. Wässrige Zubereitung enthaltend mindestens ein wässriges Hydrophobierungsmittel und mindestens ein wasserlösliches, kationisches Polymer.

2. Wässrige Zubereitung nach Anspruch 1, **dadurch gekennzeichnet, dass** das kationische Polymer quaternäre Ammoniumgruppen trägt.

3. Wässrige Zubereitung nach Anspruch 1, **dadurch gekennzeichnet, dass** das kationische Polymer Aminogruppen trägt.

4. Wässrige Zubereitung nach Anspruch 2 oder 3, **dadurch gekennzeichnet, dass** das kationische Polymer ausgewählt ist aus Poly(diallyldimethylammoniumchlorid), quaternisierte Hydroxyethyl-cellulose und Polyethylenimin.

5. Wässrige Zubereitung nach einem der vorgenannten Ansprüche, **dadurch gekennzeichnet, dass** das gewichtsmittlere Molekulargewicht des wasserlöslichen Polymers im Bereich 10 000 g/mol bis 2 000 000 g/mol, besonderes bevorzugt im Bereich von 20 000 g/mol bis 1 000 000 g/mol und ganz besonderes bevorzugt im Bereich von 30 000 g/mol bis 500 000 g/mol liegt.

6. Wässrige Zubereitung nach einem der vorgenannten Ansprüche, **dadurch gekennzeichnet, dass** sie 0,05 Gew.-% - 5,0 Gew.-%, bevorzugt 0,1 Gew.-% - 3,0 Gew.-%, besonders bevorzugt 0,2 Gew.-% - 2,0 Gew.-% des kationischen Polymers bezogen auf die Zubereitung aufweist.

7. Wässrige Zubereitung nach einem der vorgenannten Ansprüche, **dadurch gekennzeichnet, dass** es sich bei dem Hydrophobierungsmittel um eine wässrige Silikonharzemulsion, eine Silikonölemulsion, eine Emulsion oder Mikroemulsion eines aminofunktionellen Silikonöls, eine Silanemulsion, oder Gemische daraus handelt.

8. Verwendung der wässrigen Zubereitung nach einem der vorgenannten Ansprüche als Additiv zur Herstellung wässriger Beschichtungsmitteln mit Frühregenbeständigkeit.

9. Beschichtungsmitteln enthaltend eine wässrige Zubereitung nach einem der Ansprüche 1 - 7.

10. Beschichtungsmittel nach Anspruch 9, **dadurch gekennzeichnet, dass** es sich bei dem Beschichtungsmittel um einen Putz, eine Farbe, eine Grundierung oder ein Holzanstrichmittel für Außenanwendungen handelt.

11. Verfahren zur Herstellung eines frühwasserbeständigen Beschichtungsmittels, **dadurch gekennzeichnet, dass**
a) zunächst eine wässrige Zubereitung hergestellt wird, bestehend aus mindestens einem wässrigen Hydrophobierungsmittel und mindestens einer wässrigen, kationischen Polymerlösung, wobei dessen gewichtsmittleres Molekulargewicht im Bereich von 10 000 g/mol bis 1 000 000 g/mol liegt,
b) danach in die nach a) erhaltene Zubereitung mindestens ein wässriges Bindemittel hinzugegeben wird und
c) gegebenenfalls ein Emulgator oder ein Gemisch von Emulgatoren, Filmbildehilfsmittel, Pigmente, Füllstoffe, Verdickungsmittel, Verlaufsmittel, Schutzkolloide, Dispergiermittel, Netzmittel, Konservierungsmittel und/oder Entschäumer hinzugefügt wird.

12. Verfahren nach Anspruch 11, **dadurch gekennzeichnet, dass** der Gewichtsanteil an Bindemittel, bezogen auf das Gewicht an trockenem Material im Beschichtungsmittel, zwischen 1,0 - 50,0 Gew.-% und bevorzugt zwischen 3,0 - 25,0 Gew.-%, beträgt.

13. Verfahren nach Anspruch 11 oder 12, **dadurch gekennzeichnet, dass** die wässrige Zubereitung 0,05 Gew.-% - 5,0 Gew.-%, bevorzugt 0,1 Gew.-% - 3,0 Gew.-%, besonders bevorzugt 0,2 Gew.-% - 2,0 Gew.-% des kationischen Polymers bezogen auf die Zubereitung aufweist.

14. Verfahren nach einem der Ansprüche 11 bis 13, **dadurch gekennzeichnet, dass** das kationische Polymer quaternäre Ammoniumgruppen oder Aminogruppen aufweist.

15. Verfahren nach Anspruch 14, **dadurch gekennzeichnet, dass** das kationische Polymer ausgewählt ist aus Poly(diallyldimethylammoniumchloride), quaternisierte Hydroxyethyl-cellulose und Polyethylenimin.

16. Verfahren nach einem der Ansprüche 11 bis 15, **dadurch gekennzeichnet, dass** es sich bei den Bindemitteln um wässrige Polymerdispersionen basierend auf Homo- und/oder Copolymerisaten handelt.

17. Verfahren nach Anspruch 16, **dadurch gekennzeichnet, dass** die Homo- und Copolymerisate mindestens ein olefinisch ungesättigtes Monomer als Monomerbaustein enthalten.

18. Verfahren nach einem der Ansprüche 11 - 17, **dadurch gekennzeichnet, dass** das wässrige Bindemittel als letzter Bestandteil zu der Mischung gegeben wird, falls ein Emulgator oder ein Gemisch von Emulgatoren, Filmbildehilfsmittel, Pigmente, Füllstoffe, Verdickungsmittel, Verlaufsmittel, Schutzkolloide, Dispergiermittel, Netzmittel, Konservierungsmittel und/oder Entschäumer eingesetzt wird.
